(19) Europäisches Patentamt
European Patent Office
Office européen des brevets

(11) **EP 1 868 365 A2**

(12) **EUROPEAN PATENT APPLICATION**

(43) Date of publication:
**19.12.2007 Bulletin 2007/51**

(51) Int Cl.:
***H04N 1/405*** (2006.01)

(21) Application number: **07010507.7**

(22) Date of filing: **25.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **16.06.2006 JP 2006167375**

(71) Applicant: **Dainippon Screen Mfg., Co., Ltd.
Kyoto 602-8585 (JP)**

(72) Inventors:
• **Furukawa, Itaru**
c/o Dainippon Screen Mfg. Co., Ltd.
Horikawa-dori, Kamigyo-ku, Kyoto 602-8585 (JP)

• **Matsuhisa, Takeshi**
c/o Dainippon Screen Mfg. Co., Ltd.
Horikawa-dori, Kamigyo-ku, Kyoto 602-8585 (JP)
• **Asai, Hiroshi**
c/o Dainippon Screen Mfg. Co., Ltd.
Horikawa-dori, Kamigyo-ku, Kyoto 602-8585 (JP)

(74) Representative: **Kilian, Helmut
Wilhelms, Kilian & Partner
Patentanwälte
Eduard-Schmid-Strasse 2
81541 München (DE)**

(54) **Image processing apparatus, printing system, image processing method, and program**

(57) An image processing apparatus calculates a deformation direction and a deformation ratio of halftone dots, based on a printing condition including a printing direction, a printing speed and the like. Then, the image processing apparatus deforms halftone data, based on the calculated deformation direction and deformation ratio, and generates a halftone image by using the halftone data subjected to the deformation. The generated halftone image is composed of halftone dots deformed in accordance with the printing condition. Thus, the halftone dots are satisfactorily recorded on a printing sheet, and the density gradation of an image is accurately reproduced.

F I G . 1

**Description**

BACKGROUND OF THE INVENTION

Field of the Invention

The present invention relates to an image processing technique for converting an input image into a halftone image.

Description of the Background Art

In printing for a printed material such as a newspaper, it has been conventional practice to convert an image to be printed into a halftone image to print the halftone image on a printing sheet. Conventional halftone dots include square, round and chain dots in shape, and are arranged at a predetermined density (or screen ruling) to form a lattice. For conversion of the image to be printed into the halftone image, halftone dots having sizes corresponding to the densities in respective positions of the image are arranged to generate the halftone image. The density gradation of the image is represented by a dot percentage in each of the positions of the halftone image.

As discussed above, the density gradation of the image is represented by the dot percentage on the halftone image. Unfortunately, there have been cases where fine halftone dots in the halftone image for a high-speed printed material such as a newspaper are not satisfactorily printed on a printing sheet. Fig. 8 shows an example of fine halftone dots Ha recorded on a printing sheet P transported at a high speed. When the printing sheet P is transported at a high speed in this manner, the halftone dots Ha sometimes include a halftone dot (designated by the reference character Haa in Fig. 8) recorded twice because of a shake in the direction of the transport or a halftone dot (designated by the reference character Hab in Fig. 8) not recorded. In such cases, the density gradation of the image is not accurately reproduced on the printing sheet P, and the quality of the image deteriorates.

In particular, the higher screen ruling of the halftone image causes the smaller size of each halftone dot in the halftone image, to make it difficult to accurately reproduce the density gradation of the image. Traditionally, the above-mentioned problem has been avoided by setting the screen ruling of the halftone image at a relatively low level during the printing for a high-speed printed material such as a newspaper. In recent years, however, there has been a demand for printing at high screen ruling even for the high-speed printing material such as a newspaper. The above-mentioned problem not only arises when the printing speed is high but also is sometimes caused by the grain roughness of the printing sheet and other printing conditions.

SUMMARY OF THE INVENTION

The present invention is intended for an image processing apparatus for converting an input image into a halftone image.

According to the present invention, the image processing apparatus comprises: a printing condition acquisition part for acquiring a printing condition of the input image; a halftone data acquisition part for acquiring standard halftone data; a deformation ratio calculation part for calculating a deformation direction and a deformation ratio of halftone dots, based on the printing condition; a halftone dot deformation part for deforming the standard halftone data in the deformation direction, based on the deformation ratio calculated by the deformation ratio calculation part; and an image conversion part for converting the input image into a halftone image by using the halftone data deformed by the halftone dot deformation part.

The halftone image is composed of the halftone dots deformed in accordance with the printing condition. Thus, the halftone dots in the halftone image are satisfactorily recorded on a printing sheet, and the density gradation of the image is accurately reproduced.

Preferably, the deformation ratio calculation part calculates the deformation direction and the deformation ratio of the halftone dots, based on information about a printing direction and a printing speed acquired by the printing condition acquisition part.

The halftone dots in the halftone image are satisfactorily recorded on a printing sheet, and the density gradation of the image is accurately reproduced, even when the printing speed is high.

Preferably, the deformation ratio calculation part calculates the deformation direction and the deformation ratio of the halftone dots, based on information about a grain direction and a grain roughness acquired by the printing condition acquisition part.

The halftone dots in the halftone image are satisfactorily recorded on a printing sheet, and the density gradation of the image is accurately reproduced, even when the grain of the printing sheet is rough.

Preferably, the halftone data acquisition part acquires as the halftone data area data about halftone dots arranged in an array as a unit, and the halftone dot deformation part deforms the area data.

The image processing apparatus is capable of easily deforming the halftone data about each unit area and is capable of easily arranging the halftone data subjected to the deformation.

Preferably, the halftone data acquisition part acquires dot data about a single halftone dot as the halftone data, and the halftone dot deformation part deforms the dot data.

The image processing apparatus is capable of deforming and arranging the halftone dots in accordance with the printing condition even if it is impossible to form a unit including an array of halftone dots as in the area data.

According to another aspect of the present invention, the image processing apparatus comprises: a halftone data storage part for storing therein a plurality of halftone data deformed in accordance with a plurality of printing conditions; a printing condition acquisition part for acquiring a printing condition of the input image; a halftone data reading part for reading specific halftone data in accordance with the printing condition from among the plurality of halftone data stored in the halftone data storage part; and an image conversion part for converting the input image into a halftone image by using the halftone data read by the halftone data reading part.

The halftone image is composed of the deformed halftone dots specified based on the printing condition. Thus, the halftone dots in the halftone image are satisfactorily recorded on a printing sheet, and the density gradation of the image is accurately reproduced.

The present invention is also intended for a printing system for printing an image on a printing sheet. According to the present invention, the printing system comprises: an image processing apparatus for converting an input image into a halftone image; a prepress apparatus for producing a printing plate, based on the halftone image generated by the image processing apparatus; and a printing apparatus for printing the halftone image on a printing sheet by using the printing plate produced by the prepress apparatus, the image processing apparatus including a printing condition acquisition part for acquiring a printing condition of the input image from the printing apparatus, a halftone data acquisition part for acquiring standard halftone data, a deformation ratio calculation part for calculating a deformation direction and a deformation ratio of halftone dots, based on the printing condition, a halftone dot deformation part for deforming the standard halftone data in the deformation direction, based on the deformation ratio calculated by the deformation ratio calculation part, and an image conversion part for converting the input image into the halftone image by using the halftone data deformed by the halftone dot deformation part.

The halftone image is composed of the halftone dots deformed in accordance with the printing condition. Thus, the halftone dots in the halftone image are satisfactorily recorded on the printing sheet, and the density gradation of the image is accurately reproduced. Additionally, the printing system is capable of automatically acquiring the printing condition to reduce work burdens on an operator.

According to another aspect of the present invention, the printing system comprises: an image processing apparatus for converting an input image into a halftone image; a prepress apparatus for producing a printing plate, based on the halftone image generated by the image processing apparatus; and a printing apparatus for printing the halftone image on a printing sheet by using the printing plate produced by the prepress apparatus, the image processing apparatus including a halftone data storage part for storing therein a plurality of halftone data deformed in accordance with a plurality of printing conditions, a printing condition acquisition part for acquiring a printing condition of the input image from the printing apparatus, a halftone data reading part for reading specific halftone data in accordance with the printing condition from among the plurality of halftone data stored in the halftone data storage part, and an image conversion part for converting the input image into the halftone image by using the halftone data read by the halftone data reading part.

The halftone image is composed of the deformed halftone dots specified based on the printing condition. Thus, the halftone dots in the halftone image are satisfactorily recorded on the printing sheet, and the density gradation of the image is accurately reproduced. Additionally, the printing system is capable of automatically acquiring the printing condition to reduce work burdens on an operator.

The present invention is also intended for an image processing method of converting an input image into a halftone image in an image processing apparatus.

The present invention is also intended for a program for converting an input image into a halftone image.

It is therefore an object of the present invention to provide a technique capable of avoiding a recording failure of fine halftone dots on a printing sheet to accurately reproduce the density gradation of an image.

These and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram showing the construction of a printing system according to a first preferred embodiment of the present invention;

Fig. 2 is a view showing an example of standard halftone data;

Fig. 3 is a view showing an example of deformed halftone data;

Fig. 4 is a flow chart showing a procedure for image processing, prepress and printing according to the first preferred embodiment;

Fig. 5 is a block diagram showing the construction of a printing system according to a second preferred embodiment of the present invention;

Fig. 6 is a flow chart showing a procedure for image processing, prepress and printing according to the second preferred embodiment;

Fig. 7 is a view showing an example of deformed halftone dots recorded on a printing sheet transported at a high speed; and

Fig. 8 is a view showing an example of conventional halftone dots recorded on a printing sheet transported at a high speed.

DESCRIPTION OF THE PREFERRED EMBODIMENTS

Preferred embodiments according to the present invention will now be described with reference to the drawings.

<1. First Preferred Embodiment>

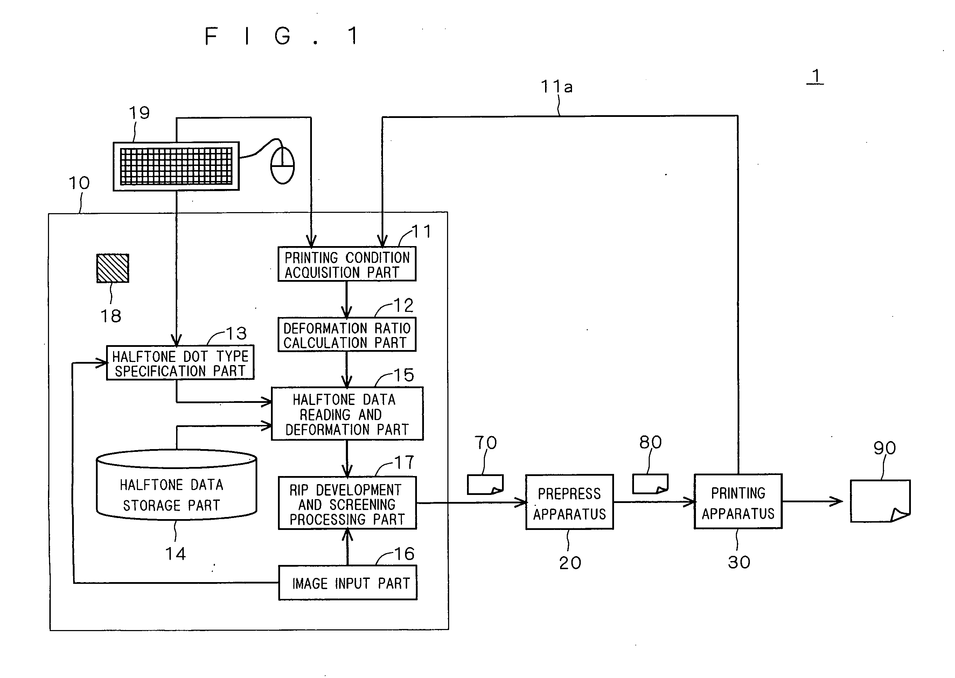

Fig. 1 is a block diagram showing the construction of a printing system 1 according to a first preferred embodiment of the present invention. The printing system 1 is a system for converting an image inputted thereto into a halftone image to print the halftone image on a printing sheet. The printing system 1 principally includes an image processing apparatus 10, a prepress apparatus 20, and a printing apparatus 30.

The image processing apparatus 10 is an apparatus for converting an image to be printed into a halftone image. As shown in Fig. 1, the image processing apparatus 10 includes a printing condition acquisition part 11, a deformation ratio calculation part 12, a halftone dot type specification part 13, a halftone data storage part 14, a halftone data reading and deformation part 15, an image input part 16, and a RIP development and screening processing part 17. The image processing apparatus 10 is specifically constructed by a typical computer including a CPU, a memory, a hard disk and the like. The parts in the computer operate, based on a program 18 installed in the computer, whereby the functions of the above-mentioned parts are implemented.

The printing condition acquisition part 11 is a processing part for bringing various printing conditions for images into the image processing apparatus 10. The printing condition acquisition part 11 is connected through a communication line 11 a to the printing apparatus 30, and acquires a printing condition set in the printing apparatus 30 by way of the communication line 11a. The printing condition acquisition part 11 is also capable of acquiring a printing condition inputted from a manual input part 19 such as a keyboard, a mouse and the like. Examples of the printing condition acquired in the printing condition acquisition part 11 include information about the printing direction of an image, a printing speed, the grain direction of a printing sheet, the grain roughness of the printing sheet, the viscosity of ink, and the like.

The deformation ratio calculation part 12 is a processing part for calculating a deformation direction of halftone dots and a deformation ratio thereof, based on the printing condition acquired in the printing condition acquisition part 11. The deformation ratio calculation part 12 calculates a deformation ratio Ksi of halftone dots in accordance with the printing speed of an image, for example, by using

$$\mathrm{Ksi} = 1.0 + \mathrm{CLIP}\{(\mathrm{Si} - \alpha\mathrm{s}) / \beta\mathrm{s}\}^{\gamma\mathrm{s}} \qquad\qquad (1)$$

where Ksi is the deformation ratio of the halftone dots in an i-direction (x- or $\gamma$-direction orthogonal to each other in an image plane), Si is a printing speed component in the i-direction, and as , $\beta$s and $\gamma$s are constants for defining the rate of change between the printing speed and the deformation ratio, and a threshold value. CLIP{} denotes a function which returns a positive number when the value inside the braces is the positive number, and returns zero when the value inside the braces is zero or a negative number. Thus, when the printing speed component Si is not greater than $\alpha$s , the deformation ratio Ksi of the halftone dots calculated using Equation (1) equals 1.0. When the printing speed component Si is greater than $\alpha$s, the deformation ratio Ksi of the halftone dots calculated using Equation (1) increases in accordance with a value exceeding the constant $\alpha$s.

The deformation ratio calculation part 12 also calculates a deformation ratio Kpi of halftone dots in accordance with the grain roughness, for example, by using

$$Kpi = 1.0 + CLIP\{Pi\}^{\gamma p} \qquad (2)$$

where $Kpi$ is the deformation ratio of the halftone dots in the i-direction, $Pi$ is the grain roughness in the i-direction, and $\gamma p$ is a constant for defining the rate of change between the grain roughness and the deformation ratio. Numeric values such as, for example, 0, 0.2, 0.5 and 0.8 are substituted for $Pi$ in accordance with the grain roughness. CLIP {} denotes a function which returns a positive number when the value inside the braces is the positive number, and returns zero when the value inside the braces is zero or a negative number. Thus, when the grain roughness $Pi$ is not greater than zero, the deformation ratio $Kpi$ of the halftone dots calculated using Equation (2) equals 1.0. When the grain roughness $Pi$ is greater than zero, the deformation ratio $Kpi$ of the halftone dots calculated using Equation (2) increases from 1.0 in accordance with the grain roughness $Pi$.

For calculation of a deformation ratio of halftone dots based on the printing speed and the grain roughness, the deformation ratio calculation part 12 calculates a deformation ratio $Kwi$ of halftone dots in accordance with the printing speed and the grain roughness by using

$$Kwi = Ksi \cdot Kpi \qquad (3)$$

In Equation (3), the deformation ratio $Kwi$ of the halftone dots in the i-direction is calculated by multiplying the above-mentioned deformation ratios $Ksi$ and $Kpi$ by each other.

The deformation ratio calculation part 12 further calculates a deformation ratio $Ki$ (i.e., $Kx$ and $Ky$) of halftone dots to be finally applied to the halftone data reading and deformation part 15, based on the deformation ratio $Kwi$ (i.e., $Kwx$ and $Kwy$) calculated using Equation (3) described above. When $Kwx > Kwy$, the deformation ratio calculation part 12 calculates the final deformation ratios $Kx$ and $Ky$ by using

$$Kx = Kwx / Kwy, \quad Ky = 1.0 \qquad (4)$$

In Equation (4), while the ratio between the deformation ratio in the x-direction and the deformation ratio in the $\gamma$-direction is held, the deformation ratio in the $\gamma$-direction is set at 1.0, whereby the deformation direction of the halftone dots is concentrated only on the x-direction.

Also, when $Kwx < Kwy$, the deformation ratio calculation part 12 calculates the final deformation ratios $Kx$ and $Ky$ by using

$$Kx = 1.0, \quad Ky = Kwy / Kwx \qquad (5)$$

In Equation (5), while the ratio between the deformation ratio in the x-direction and the deformation ratio in the y-direction is held, the deformation ratio in the x-direction is set at 1.0, whereby the deformation direction of the halftone dots is concentrated only on the y-direction.

The halftone dot type specification part 13 is a processing part for specifying the type of halftone dots in accordance with the image inputted from the image input part 16. The halftone dot type specification part 13 specifies one of the shapes of the halftone dots including, for example, square dots, chain dots and round dots in accordance with the type of the image. Also, the halftone dot type specification part 13 specifies a screen ruling indicating the density at which the halftone dots are arranged and a screen angle indicating the angle at which the halftone dots are arranged in accordance with the type of the image and the color components thereof. It should be noted that the halftone dot type specification part 13 is capable of specifying the above-mentioned items, based on information inputted from the manual input part 19.

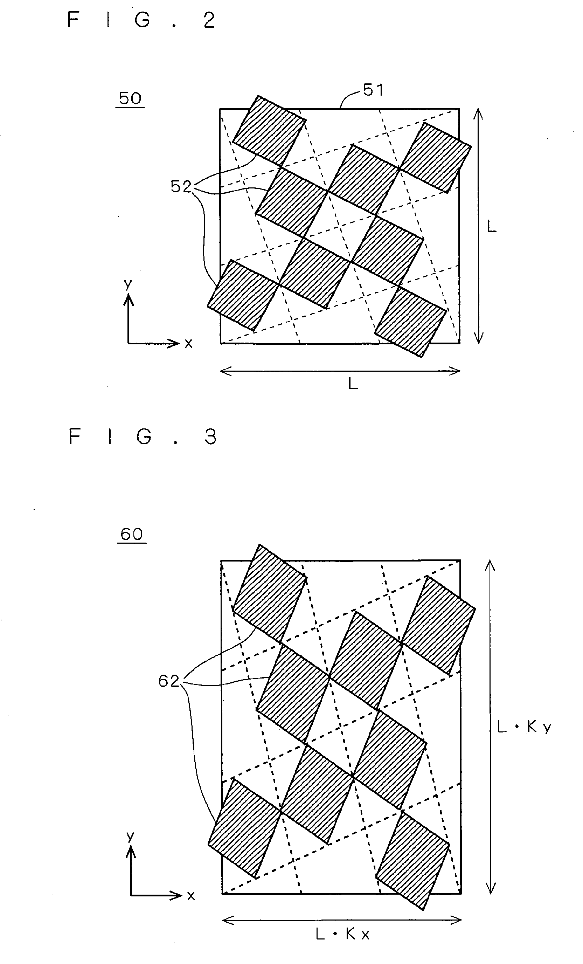

The halftone data storage part 14 is a storage part for storing standard halftone data therein. The halftone data storage part 14 stores a plurality of standard halftone data prepared in corresponding relation to a plurality of halftone dot types. Each of the halftone data is stored in the halftone data storage part 14 in the form of area data about halftone dots arranged in an array as a unit, as shown in the example of Fig. 2. Halftone data 50 shown in Fig. 2 is such that eight halftone dots 52 each having the shape of a square dot are arranged in a unit area 51 having a length L extending both in the x- and y-directions.

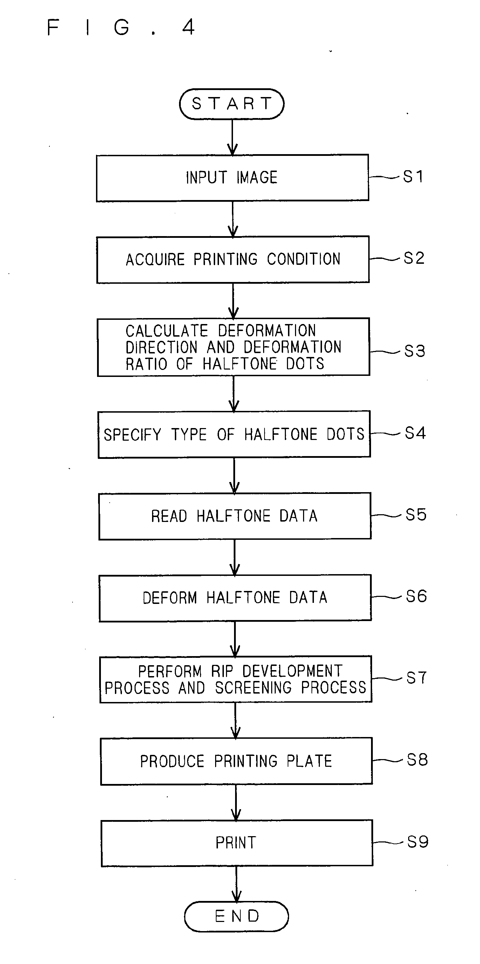

The halftone data reading and deformation part 15 is a processing part for reading standard halftone data from the halftone data storage part 14 to deform the read standard halftone data. The halftone data reading and deformation part 15 reads one of the plurality of halftone data stored in the halftone data storage part 14, based on the type of halftone dots specified by the halftone dot type specification part 13. Then, the halftone data reading and deformation part 15 deforms the read halftone data, based on the deformation ratio Ki calculated by the deformation ratio calculation part 12. As an example, when the halftone data reading and deformation part 15 reads the halftone data 50 shown in Fig. 2, the halftone data reading and deformation part 15 multiplies the halftone data 50 by the deformation ratio Kx in the x-direction and multiplied the halftone data 50 by the deformation ratio Ky in the y-direction to generate halftone data 60 subjected to the deformation as shown in Fig. 3. The halftone data 60 subjected to the deformation has a length of L•Kx in the x-direction and a length of L•Ky in the y-direction. Halftone dots 62 included in the halftone data 60 subjected to the deformation are obtained by deforming the halftone dots 52 included in the undeformed halftone data 50 by using the deformation ratios Kx and Ky.

Referring again to Fig. 1, the image input part 16 is a processing part for inputting an image to be printed into the image processing apparatus 10. The image to be processed includes a color or monochrome image with multiple gradation levels of density, and is inputted to the image input part 16 in the form of image data described, for example, in Portable Document Format or PostScript (a registered trademark of Adobe Systems Incorporated) format. The image input part 16 checks to see whether the format of the inputted image and the descriptions of a header thereof are compatible with image processing or not. When it is not judged that the format and the descriptions are compatible with the image processing, the image input part 16 rejects the input of the image, and transmits information so indicating to an operator. When it is judged that the format and the descriptions are compatible with the image processing, the image input part 16 permits the input of the image.

The RIP development and screening processing part 17 is a processing part for performing a RIP development process and a screening process on an image inputted thereto. The RIP development and screening processing part 17 rasterizes the inputted image to convert the inputted image into a bitmapped image. Then, the RIP development and screening processing part 17 arranges halftone data in accordance with the density values of the respective pixels of the bitmapped image to generate a halftone image 70. The RIP development and screening processing part 17 generates the halftone image 70 by using the halftone data deformed by the halftone data reading and deformation part 15.

The prepress apparatus 20 is an apparatus for recording the halftone image 70 generated in the image processing apparatus 10 on a metal plate for each color component to produce a printing plate 80. The prepress apparatus 20, for example, rotates a metal plate coated with a photosensitive material while holding the metal plate on the surface of a drum, and directs a laser light beam from a recording head onto the metal plate, to thereby record the halftone image 70 on the metal plate.

The printing apparatus 30 is an apparatus for printing the halftone image 70 on a printing sheet by using the printing plate 80 produced in the prepress apparatus 20. The printing apparatus 30 is constructed by, for example, a rotary press which mounts the printing plate 80 on a plate cylinder having a cylindrical configuration to transfer the halftone image 70 from the printing plate 80 to a printing sheet having a strip-shaped configuration while transporting the printing sheet at a high speed. Information about the printing direction of the image, the printing speed, the grain direction of the printing sheet, the grain roughness of the printing sheet, the viscosity of ink, and the like is set in the printing apparatus 30. Such information can be referenced by the image processing apparatus 10 through the communication line 11 a.

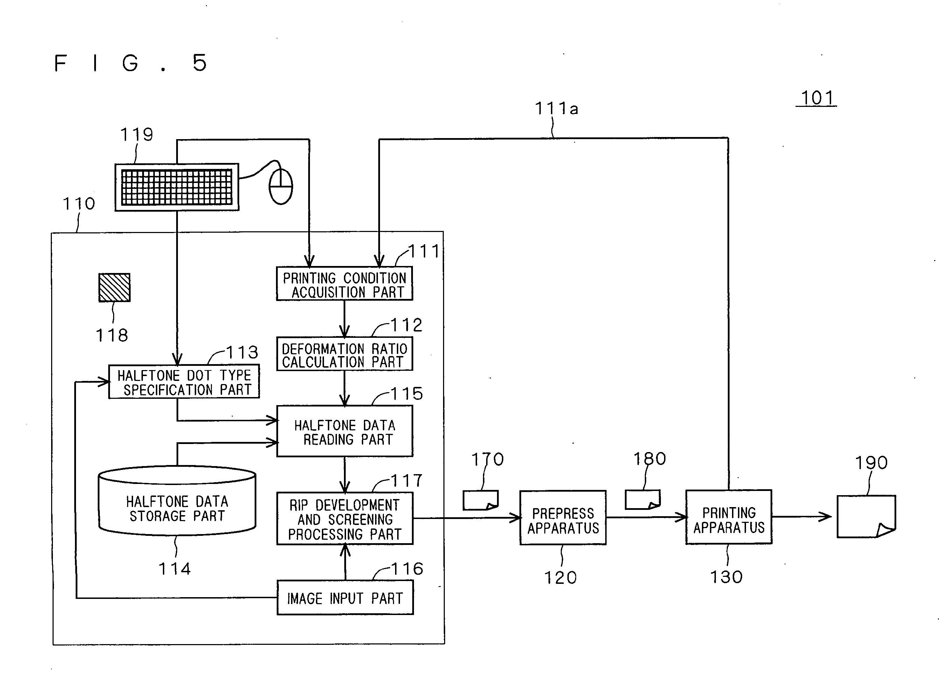

Next, a procedure for the image processing, prepress and printing in the above-mentioned printing system 1 will be described with reference to Fig. 1 and the flow chart of Fig. 4.

When the printing system 1 receives an image to be printed, the image is inputted through the image input part 16 to the image processing apparatus 10 (in Step S1). The image inputted to the image processing apparatus 10 is once stored in a predetermined storage part in the image processing apparatus 10, and is made readable in Step S7 to be described later:

Next, the printing condition acquisition part 11 acquires a printing condition corresponding to the inputted image from the printing apparatus 30 through the communication line 11 a (in Step S2). Thus, the information about the printing direction of the image, the printing speed, the grain direction of the printing sheet, the grain roughness of the printing sheet, the viscosity of ink, and the like is brought as the printing condition into the image processing apparatus 10. Alternatively, the printing system 1 may be adapted to allow an operator of the image processing apparatus 10 to enter the printing condition from the manual input part 19.

Subsequently, the deformation ratio calculation part 12 calculates the deformation direction of halftone dots and the deformation ratio thereof, based on the acquired printing condition (in Step S3). The deformation ratio calculation part 12 uses, for example, Equations (1) to (5) described above to calculate the deformation ratios Kx and Ky of the halftone dots in accordance with the printing speed and the grain roughness of the printing sheet. Information about the calculated deformation ratios Kx and Ky is transferred from the deformation ratio calculation part 12 to the halftone data reading and deformation part 15.

The halftone dot type specification part 13, on the other hand, acquires information about the image inputted to the image input part 16 to specify the type of halftone dots in accordance with the image (in Step S4). Specifically, the halftone dot type specification part 13 specifies the halftone dot shape, screen ruling and screen angle which are optimum for the representation of the density gradation of the inputted image to transfer information about the specified halftone dot shape, screen ruling and screen angle to the halftone data reading and deformation part 15. Alternatively, the printing system 1 may be adapted to allow an operator of the image processing apparatus 10 to enter the type of halftone dots from the manual input part 19.

Thereafter, the halftone data reading and deformation part 15 reads halftone data compatible with the halftone dot shape, screen ruling and screen angle specified in Step S4 from among the standard halftone data stored in the halftone data storage part 14 (in Step S5). Then, the halftone data reading and deformation part 15 deforms the read halftone data by using the deformation ratios Kx and Ky calculated in Step S3 (in Step S6). The deformation ratios Kx and Ky are calculated in Step S3 described above in consideration for the printing speed of the image and the grain roughness of the printing sheet. Thus, the halftone data is deformed in the x-direction or in the y-direction in accordance with the printing speed of the image and the grain roughness of the printing sheet. When the printing speed, for example, has a large influence, the halftone data reading and deformation part 15 generates the halftone data extended in the printing direction. When the grain roughness has a large influence, the halftone data reading and deformation part 15 generates the halftone data extended in the grain direction of the printing sheet.

The RIP development and screening processing part 17 reads the image inputted in Step S1 to perform the RIP development process and the screening process on the read image (in Step S7). Specifically, the RIP development and screening processing part 17 initially rasterizes the inputted image to convert the inputted image into a bitmapped image. Then, the RIP development and screening processing part 17 arranges the halftone data deformed in Step S6 in accordance with the density values of the respective pixels of the bitmapped image, to thereby generate the halftone image 70. The generated halftone image 70 is transferred from the image processing apparatus 10 to the prepress apparatus 20.

The prepress apparatus 20 records the halftone image 70 transferred from the image processing apparatus 10 onto a metal plate to produce the printing plate 80 (in Step S8). Then, the printing apparatus 30 performs printing on the printing sheet by using the printing plate 80 produced in the prepress apparatus 20 to produce a final printed material 90 (in Step S9). The halftone image recorded on the printed material 90 is composed of halftone dots deformed in accordance with the printing speed and the grain roughness of the printing sheet. Thus, the halftone dots in the halftone image are satisfactorily recorded on the printing sheet, and the density gradation of the image is accurately reproduced on the printed material 90.

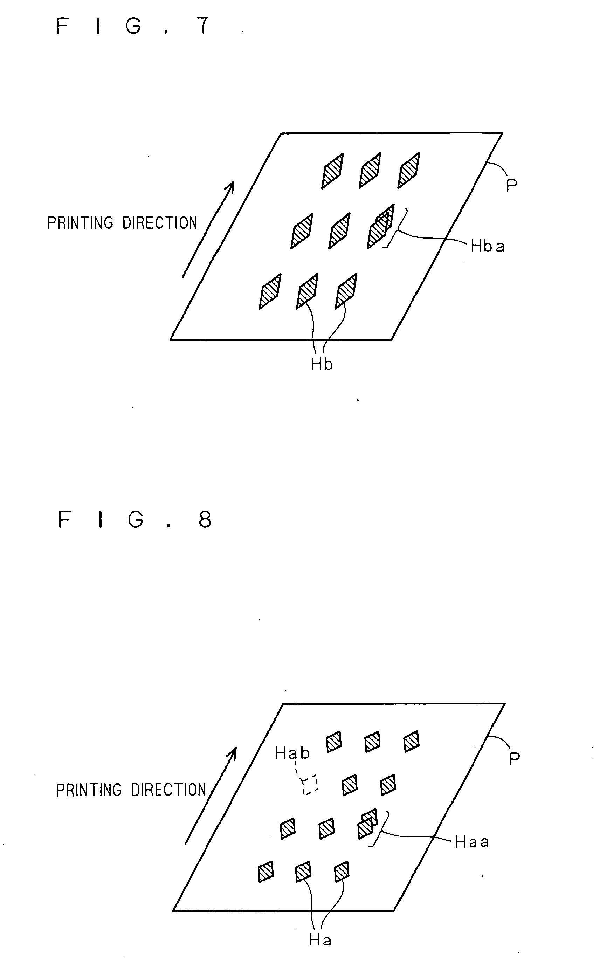

When the printing speed, for example, has a large influence, the halftone image is composed of the halftone dots extended in the printing direction. Thus, the size of the halftone dots is increased in the printing direction. This avoids an omission of halftone dots on the printing sheet being transported in the printing direction at a high speed to achieve satisfactory recording of the halftone dots. As shown in Fig. 7, when halftone dots Hb extended in the printing direction include a halftone dot (designated by the reference character Hba in Fig. 7) recorded twice, the rate of change of the area of the halftone dot Hba is smaller than the rate of change of the area of the conventional halftone dot Haa (shown in Fig. 8) if the amount of shake is equal. Therefore, the first preferred embodiment achieves a small change in density gradation as compared with that obtained by the conventional techniques to allow the shake of the halftone dots to appear inconspicuous.

Additionally, the direction of the deformation of the above-mentioned halftone dots in the first preferred embodiment is a direction such that there can arise a problem in recording of the halftone dots, such as the printing direction and the grain direction. Thus, the size of the halftone dots is not extended in a direction such that the above problem does not occur (e.g., the x-direction in the example of Fig. 3, and a direction perpendicular to the printing direction in the example of Fig. 7). This maintains the resolution of the halftone image in such a direction.

<2. Second Preferred Embodiment

Fig. 5 is a block diagram showing the construction of a printing system 101 according to a second preferred embodiment of the present invention. The printing system 101 is a system for converting an image inputted thereto into a halftone image to print the halftone image on a printing sheet. The printing system 101 principally includes an image processing apparatus 110, a prepress apparatus 120, and a printing apparatus 130.

The image processing apparatus 110 is an apparatus for converting an image to be printed into a halftone image. As shown in Fig. 5, the image processing apparatus 110 includes a printing condition acquisition part 111, a deformation ratio calculation part 112, a halftone dot type specification part 113, a halftone data storage part 114, a halftone data reading part 115, an image input part 116, and a RIP development and screening processing part 117. The image processing apparatus 110 is specifically constructed by a typical computer including a CPU, a memory, a hard disk and the like. The parts in the computer operate, based on a program 118 installed in the computer, whereby the functions of the above-mentioned parts are implemented.

The printing condition acquisition part 111 is a processing part for bringing various printing conditions for images into the image processing apparatus 110. The printing condition acquisition part 111 is connected through a communication line 111a to the printing apparatus 130, and acquires a printing condition set in the printing apparatus 130 by way of the communication line 111a. The printing condition acquisition part 111 is also capable of acquiring a printing condition inputted from a manual input part 119 such as a keyboard, a mouse and the like. Examples of the printing condition acquired in the printing condition acquisition part 111 include information about the printing direction of an image, a printing speed, the grain direction of a printing sheet, the grain roughness of the printing sheet, the viscosity of ink, and the like.

The deformation ratio calculation part 112 is a processing part for calculating a deformation direction of halftone dots and a deformation ratio thereof, based on the printing condition acquired in the printing condition acquisition part 111. The deformation ratio calculation part 112 calculates a deformation ratio Ksi of halftone dots in accordance with the printing speed of an image, for example, by using

$$Ksi = 1.0 + CLIP\{(Si - \alpha s)/\beta s\}^{\gamma s} \qquad (101)$$

where Ksi is the deformation ratio of the halftone dots in an i-direction (x- or y-direction orthogonal to each other in an image plane), Si is a printing speed component in the i-direction, and $\alpha s$, $\beta s$ and $\gamma s$ are constants for defining the rate of change between the printing speed and the deformation ratio, and a threshold value. CLIP{} denotes a function which returns a positive number when the value inside the braces is the positive number, and returns zero when the value inside the braces is zero or a negative number. Thus, when the printing speed component Si is not greater than $\alpha s$, the deformation ratio Ksi of the halftone dots calculated using Equation (101) equals 1.0. When the printing speed component Si is greater than $\alpha s$, the deformation ratio Ksi of the halftone dots calculated using Equation (101) increases in accordance with a value exceeding the constant $\alpha s$.

The deformation ratio calculation part 112 also calculates a deformation ratio Kpi of halftone dots in accordance with the grain roughness, for example, by using

$$Kpi = 1.0 + CLIP\{Pi\}^{\gamma p} \qquad (102)$$

where Kpi is the deformation ratio of the halftone dots in the i-direction, Pi is the grain roughness in the i-direction, and $\gamma p$ is a constant for defining the rate of change between the grain roughness and the deformation ratio. Numeric values such as, for example, 0, 0.2, 0.5 and 0.8 are substituted for Pi in accordance with the grain roughness. CLIP{} denotes a function which returns a positive number when the value inside the braces is the positive number, and returns zero when the value inside the braces is zero or a negative number. Thus, when the grain roughness Pi is not greater than zero, the deformation ratio Kpi of the halftone dots calculated using Equation (102) equals 1.0. When the grain roughness Pi is greater than zero, the deformation ratio Kpi of the halftone dots calculated using Equation (102) increases from 1.0 in accordance with the grain roughness Pi.

For calculation of a deformation ratio of halftone dots based on the printing speed and the grain roughness, the deformation ratio calculation part 112 calculates a deformation ratio Kwi of halftone dots in accordance with the printing speed and the grain roughness by using

$$Kwi = Ksi \cdot Kpi \qquad (103)$$

In Equation (103), the deformation ratio Kwi of the halftone dots in the i-direction is calculated by multiplying the above-mentioned deformation ratios Ksi and Kpi by each other.

The deformation ratio calculation part 112 further calculates a deformation ratio Ki (i.e., Kx and Ky) of halftone dots to be finally applied to the halftone data reading part 115, based on the deformation ratio Kwi (i.e., Kwx and Kwy) calculated using Equation (103) described above. When Kwx > Kwy, the deformation ratio calculation part 112 calculates the final deformation ratios Kx and Ky by using

$$Kx = Kwx / Kwy, \quad Ky = 1.0 \tag{104}$$

In Equation (104), while the ratio between the deformation ratio in the x-direction and the deformation ratio in the y-direction is held, the deformation ratio in the y-direction is set at 1.0, whereby the deformation direction of the halftone dots is concentrated only on the x-direction.

Also, when Kwx < Kwy, the deformation ratio calculation part 112 calculates the final deformation ratios Kx and Ky by using

$$Kx = 1.0, \quad Ky = Kwy / Kwx \tag{105}$$

In Equation (105), while the ratio between the deformation ratio in the x-direction and the deformation ratio in the y-direction is held, the deformation ratio in the x-direction is set at 1.0, whereby the deformation direction of the halftone dots is concentrated only on the y-direction.

The halftone dot type specification part 113 is a processing part for specifying the type of halftone dots in accordance with the image inputted from the image input part 116. The halftone dot type specification part 113 specifies one of the shapes of the halftone dots including, for example, square dots, chain dots and round dots in accordance with the type of the image. Also, the halftone dot type specification part 113 specifies a screen ruling indicating the density at which the halftone dots are arranged and a screen angle indicating the angle at which the halftone dots are arranged in accordance with the type of the image and the color components thereof. It should be noted that the halftone dot type specification part 113 is capable of specifying the above-mentioned items, based on information inputted from the manual input part 119.

The halftone data storage part 114 is a storage part for storing a plurality of previously deformed halftone data therein. The halftone data storage part 114 stores a multiplicity of halftone data which are obtained by deforming a plurality of standard halftone data corresponding to a plurality of halftone dot types in accordance with a plurality of deformation directions and a plurality of deformation ratios. Each of the halftone data is stored in the halftone data storage part 114 in the form of area data about halftone dots arranged in an array as a unit, as shown in the example of Fig. 3.

The halftone data reading part 115 is a processing part for reading deformed halftone data from the halftone data storage part 114. The halftone data reading part 115 reads halftone data which is compatible with the halftone dot type specified by the halftone dot type specification part 113 and which has a deformation direction and a deformation ratio identical with (or approximate to) the deformation direction and deformation ratio calculated by the deformation ratio calculation part 112 from among the multiplicity of halftone data stored in the halftone data storage part 114.

The image input part 116 is a processing part for inputting an image to be printed into the image processing apparatus 110. The image to be processed includes a color or monochrome image with multiple gradation levels of density, and is inputted to the image input part 116 in the form of image data described, for example, in Portable Document Format or PostScript (a registered trademark of Adobe Systems Incorporated) format. The image input part 116 checks to see whether the format of the inputted image and the descriptions of a header thereof are compatible with image processing or not. When it is not judged that the format and the descriptions are compatible with the image processing, the image input part 116 rejects the input of the image, and transmits information so indicating to an operator. When it is judged that the format and the descriptions are compatible with the image processing, the image input part 116 permits the input of the image.

The RIP development and screening processing part 117 is a processing part for performing a RIP development process and a screening process on an image inputted thereto. The RIP development and screening processing part 117 rasterizes the inputted image to convert the inputted image into a bitmapped image. Then, the RIP development and screening processing part 117 arranges halftone data in accordance with the density values of the respective pixels of the bitmapped image to generate a halftone image 170. The RIP development and screening processing part 117 generates the halftone image 170 by using the deformed halftone data read by the halftone data reading part 115.

The prepress apparatus 120 is an apparatus for recording the halftone image 170 generated in the image processing apparatus 110 on a metal plate for each color component to produce a printing plate 180. The prepress apparatus 120, for example, rotates a metal plate coated with a photosensitive material while holding the metal plate on the surface of a drum, and directs a laser light beam from a recording head onto the metal plate, to thereby record the halftone image 170 on the metal plate.

The printing apparatus 130 is an apparatus for printing the halftone image 170 on a printing sheet by using the printing plate 180 produced in the prepress apparatus 120. The printing apparatus 130 is constructed by, for example, a rotary press which mounts the printing plate 180 on a plate cylinder having a cylindrical configuration to transfer the halftone image 170 from the printing plate 180 to a printing sheet having a strip-shaped configuration while transporting the printing sheet at a high speed. Information about the printing direction of the image, the printing speed, the grain direction of the printing sheet, the grain roughness of the printing sheet, the viscosity of ink, and the like is set in the printing apparatus 130. Such information can be referenced by the image processing apparatus 110 through the communication line 111a.

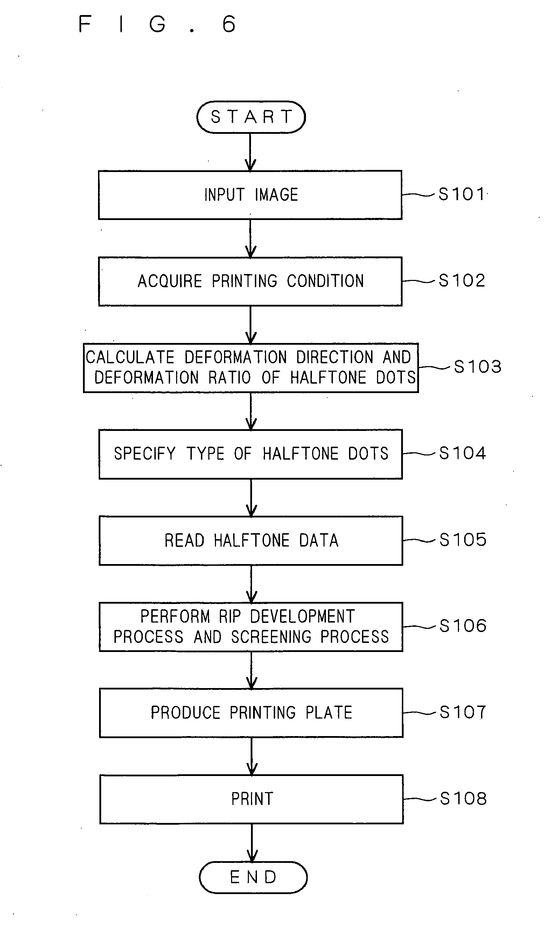

Next, a procedure for the image processing, prepress and printing in the above-mentioned printing system 101 will be described with reference to Fig. 5 and the flow chart of Fig. 6.

When the printing system 101 receives an image to be printed, the image is inputted through the image input part 116 to the image processing apparatus 110 (in Step S101). The image inputted to the image processing apparatus 110 is once stored in a predetermined storage part in the image processing apparatus 110, and is made readable in Step S 106 to be described later.

Next, the printing condition acquisition part 111 acquires a printing condition corresponding to the inputted image from the printing apparatus 130 through the communication line 111a (in Step S102). Thus, the information about the printing direction of the image, the printing speed, the grain direction of the printing sheet, the grain roughness of the printing sheet, the viscosity of ink, and the like is brought as the printing condition into the image processing apparatus 110. Alternatively, the printing system 101 may be adapted to allow an operator of the image processing apparatus 110 to enter the printing condition from the manual input part 119.

Subsequently, the deformation ratio calculation part 112 calculates the deformation direction of halftone dots and the deformation ratio thereof, based on the acquired printing condition (in Step S103). The deformation ratio calculation part 112 uses, for example, Equations (101) to (105) described above to calculate the deformation ratios $Kx$ and $Ky$ of the halftone dots in accordance with the printing speed and the grain roughness of the printing sheet. Information about the calculated deformation ratios $Kx$ and $Ky$ is transferred from the deformation ratio calculation part 112 to the halftone data reading part 115.

The halftone dot type specification part 113, on the other hand, acquires information about the image inputted to the image input part 116 to specify the type of halftone dots in accordance with the image (in Step S104). Specifically, the halftone dot type specification part 113 specifies the halftone dot shape, screen ruling and screen angle which are optimum for the representation of the density gradation of the inputted image to transfer information about the specified halftone dot shape, screen ruling and screen angle to the halftone data reading part 115. Alternatively, the printing system 101 may be adapted to allow an operator of the image processing apparatus 110 to enter the type of halftone dots from the manual input part 119.

Thereafter, the halftone data reading part 115 reads halftone data which is compatible with the halftone dot shape, screen ruling and screen angle specified in Step S104 and which has deformation ratios identical with (or approximate to) the deformation ratios $Kx$ and $Ky$ calculated in Step S103 from among the standard halftone data stored in the halftone data storage part 114 (in Step S105). The deformation ratios $Kx$ and $Ky$ are calculated in Step S 103 described above in consideration for the printing speed of the image and the grain roughness of the printing sheet. Thus, the read halftone data is deformed in the x-direction or in the y-direction in accordance with the printing speed of the image and the grain roughness of the printing sheet. When the printing speed, for example, has a large influence, the halftone data reading part 115 reads the halftone data extended in the printing direction. When the grain roughness has a large influence, the halftone data reading part 15 reads the halftone data extended in the grain direction of the printing sheet.

The RIP development and screening processing part 117 reads the image inputted in Step S 101 to perform the RIP development process and the screening process on the read image (in Step S 106). Specifically, the RIP development and screening processing part 117 initially rasterizes the inputted image to convert the inputted image into a bitmapped image. Then, the RIP development and screening processing part 117 arranges the halftone data read in Step S105 in accordance with the density values of the respective pixels of the bitmapped image, to thereby generate the halftone image 170. The generated halftone image 170 is transferred from the image processing apparatus 110 to the prepress apparatus 120.

The prepress apparatus 120 records the halftone image 170 transferred from the image processing apparatus 110 onto a metal plate to produce the printing plate 180 (in Step S107). Then, the printing apparatus 130 performs printing on the printing sheet by using the printing plate 180 produced in the prepress apparatus 120 to produce a final printed material 190 (in Step 108). The halftone image recorded on the final printed material 190 is composed of deformed halftone dots read in accordance with the printing speed and the grain roughness of the printing sheet. Thus, the halftone dots in the halftone image are satisfactorily recorded on the printing sheet, and the density gradation of the image is accurately reproduced on the final printed material 190.

When the printing speed, for example, has a large influence, the halftone image is composed of the halftone dots extended in the printing direction. Thus, the size of the halftone dots is increased in the printing direction. This avoids an omission of halftone dots on the printing sheet being transported in the printing direction at a high speed to achieve satisfactory recording of the halftone dots. As shown in Fig. 7, when the halftone dots Hb extended in the printing direction include a halftone dot (designated by the reference character Hba in Fig. 7) recorded twice, the rate of change of the area of the halftone dot Hba is smaller than the rate of change of the area of the conventional halftone dot Haa (shown in Fig. 8) if the amount of shake is equal. Therefore, the second preferred embodiment achieves a small change in density gradation as compared with that obtained by the conventional techniques to allow the shake of the halftone dots to appear inconspicuous.

Additionally, the direction of the deformation of the above-mentioned halftone dots in the second preferred embodiment is a direction such that there can arise a problem in recording of the halftone dots, such as the printing direction and the grain direction. Thus, the size of the halftone dots is not extended in a direction such that the above problem does not occur (e.g., the x-direction in the example of Fig. 3, and a direction perpendicular to the printing direction in the example of Fig. 7). This maintains the resolution of the halftone image in such a direction.

<3. Modifications>

The principal preferred embodiments according to the present invention have been described above. The present invention, however, is not limited to the above-mentioned examples. In the above-mentioned examples, the halftone data are stored in the halftone data storage part 14 or 114 in the form of the area data as shown in Fig. 2 or 3. However, the halftone data may be stored in the halftone data storage part 14 or 114 in the form of dot data concerning a single halftone dot. In this case, a plurality of halftone data are deformed for each dot data, and are arranged in a two-dimensional array in accordance with the specified screen ruling and screen angle. Storing the halftone data for each dot data in this manner enables the halftone dots to be deformed and arranged in accordance with the printing condition even if it is impossible to form a unit including an array of halftone dots as in the area data (e.g., if the tangent of the screen angle is an irrational number).

In the above-mentioned examples, the halftone dots are deformed or read by using the deformation ratios $Kx$ and $Ky$ finally calculated in consideration for both the printing speed and the grain roughness. However, the finally calculated deformation ratios $Kx$ and $Ky$ need not necessarily be used. For example, when it is not necessary to consider the grain roughness, the deformation ratio $Ksi$ in consideration for only the printing speed may be used. In contrast to this, when it is not necessary to consider the printing speed, the deformation ratio $Kpi$ in consideration for only the grain roughness may be used. When there is no harm in deforming halftone dots in two directions, the deformation ratio $Kwi$ may be used. Equations (1) to (5) and Equations (101) to (105) described above are illustrative only, and other equations may be used if the deformation ratio is calculated, based on a printing condition.

In the above-mentioned examples, the deformation ratio of the halftone dots is calculated in consideration for "printing speed" and "grain roughness" as the printing conditions. However, other printing conditions such as "ink viscosity" and "printing plate type" may be taken into consideration for the calculation of the deformation ratio of the halftone dots. When the viscosity of ink is taken into consideration, a deformation ratio $Ki'$ of halftone dots may be calculated, for example, by using.

$$Ki' = Ki \cdot (1.0 + CLIP\{B\}^{\gamma b}) \tag{6}$$

where $Ki'$ is the deformation ratio of the halftone dots in the i-direction, B is the viscosity of ink, and $\gamma b$ is a constant for defining the rate of change between the viscosity of ink and the deformation ratio. Numeric values such as, for example, 0.6, 0.8 and 1.0 are substituted for B in accordance with the viscosity of ink. CLIP{} denotes a function which returns a positive number when the value inside the braces is the positive number, and returns zero when the value inside the braces is zero or a negative number. Thus, when the viscosity B of ink is not greater than zero, the deformation ratio $Ki'$ of the halftone dots calculated using Equation (6) remains equal to $Ki$. When the viscosity B of ink is greater than zero, the deformation ratio $Ki'$ of the halftone dots calculated using Equation (6) increases from $Ki$ in accordance with the viscosity B of ink.

The deformation ratio of halftone dots may be calculated in accordance with a characteristic of the image. As an example, the direction and intensity of moiré fringes appearing when the inputted image is converted into the halftone image may be determined, and a deformation ratio $Kmi$ of halftone dots may be calculated, for example, by using

$$Kmi = 1.0 + CLIP\{M\}^{\gamma m} \tag{7}$$

where Kmi is the deformation ratio of the halftone dots in the i-direction, M is the intensity of moiré fringes in the i-direction, and $\gamma m$ is a constant for defining the rate of change between the intensity of moiré fringes and the deformation ratio. CLIP { } denotes a function which returns a positive number when the value inside the braces is the positive number, and returns zero when the value inside the braces is zero or a negative number. Thus, when the intensity M of moiré fringes is not greater than zero, the deformation ratio Kmi of the halftone dots calculated using Equation (7) equals 1.0. When the intensity M of moiré fringes is greater than zero, the deformation ratio Kmi of the halftone dots calculated using Equation (7) increases from 1.0 in accordance with the intensity M of moiré fringes. The direction and intensity of moiré fringes may be obtained from a technique disclosed, for example, in Japanese Patent Application Laid-Open No. 2000-295476.

Deforming the halftone dots in consideration for the characteristic of the image in this manner not only ameliorates the recording failures of fine halftone dots but also alleviates problems inherent in the image such as moiré fringes.

In the above-mentioned examples, the deformed halftone data is applied to the entire inputted image. The deformed halftone data, however, need not necessarily be applied to the entire inputted image. As an example, the deformed halftone data may be applied only to an area of the inputted image in which a significant change in density gradation appears, whereas standard halftone data which is undeformed be applied to other areas. This achieves the accurate reproduction of the change in density gradation in the area in which the significant change in density gradation appears while ensuring a high resolution in the area in which a small change in density gradation appears.

While the invention has been described in detail, the foregoing description is in all aspects illustrative and not restrictive. It is understood that numerous other modifications and variations can be devised without departing from the scope of the invention.

**Claims**

1. An image processing apparatus for converting an input image into a halftone image, comprising:

   a printing condition acquisition part for acquiring a printing condition of said input image;
   a halftone data acquisition part for acquiring standard halftone data;
   a deformation ratio calculation part for calculating a deformation direction and a deformation ratio of halftone dots, based on said printing condition;
   a halftone dot deformation part for deforming said standard halftone data in said deformation direction, based on said deformation ratio calculated by said deformation ratio calculation part; and
   an image conversion part for converting said input image into a halftone image by using the halftone data deformed by said halftone dot deformation part.

2. The image processing apparatus according to claim 1, wherein
   said deformation ratio calculation part calculates said deformation direction and said deformation ratio of the halftone dots, based on information about a printing direction and a printing speed acquired by said printing condition acquisition part.

3. The image processing apparatus according to claim 1, wherein
   said deformation ratio calculation part calculates said deformation direction and said deformation ratio of the halftone dots, based on information about a grain direction and a grain roughness acquired by said printing condition acquisition part.

4. The image processing apparatus according to claim 1, wherein
   said halftone data acquisition part acquires as said halftone data area data about halftone dots arranged in an array as a unit, and
   said halftone dot deformation part deforms said area data.

5. The image processing apparatus according to claim 1, wherein
   said halftone data acquisition part acquires dot data about a single halftone dot as said halftone data, and
   said halftone dot deformation part deforms said dot data.

6. An image processing apparatus for converting an input image into a halftone image, comprising:

   a halftone data storage part for storing therein a plurality of halftone data deformed in accordance with a plurality of printing conditions;

a printing condition acquisition part for acquiring a printing condition of said input image;

a halftone data reading part for reading specific halftone data in accordance with said printing condition from among said plurality of halftone data stored in said halftone data storage part; and

an image conversion part for converting said input image into a halftone image by using the halftone data read by said halftone data reading part.

7. A printing system for printing an image on a printing sheet, comprising:

an image processing apparatus for converting an input image into a halftone image;

a prepress apparatus for producing a printing plate, based on the halftone image generated by said image processing apparatus; and

a printing apparatus for printing the halftone image on a printing sheet by using the printing plate produced by said prepress apparatus,

said image processing apparatus including

a printing condition acquisition part for acquiring a printing condition of said input image from said printing apparatus, '

a halftone data acquisition part for acquiring standard halftone data,

a deformation ratio calculation part for calculating a deformation direction and a deformation ratio of halftone dots, based on said printing condition,

a halftone dot deformation part for deforming said standard halftone data in said deformation direction, based on said deformation ratio calculated by said deformation ratio calculation part, and

an image conversion part for converting said input image into the halftone image by using the halftone data deformed by said halftone dot deformation part.

8. A printing system for printing an image on a printing sheet, comprising:

an image processing apparatus for converting an input image into a halftone image;

a prepress apparatus for producing a printing plate, based on the halftone image generated by said image processing apparatus; and

a printing apparatus for printing the halftone image on a printing sheet by using the printing plate produced by said prepress apparatus,

said image processing apparatus including

a halftone data storage part for storing therein a plurality of halftone data deformed in accordance with a plurality of printing conditions,

a printing condition acquisition part for acquiring a printing condition of said input image from said printing apparatus,

a halftone data reading part for reading specific halftone data in accordance with said printing condition from among said plurality of halftone data stored in said halftone data storage part, and

an image conversion part for converting said input image into the halftone image by using the halftone data read by said halftone data reading part.

9. An image processing method of converting an input image into a halftone image in an image processing apparatus, said method comprising the steps of:

(a) acquiring a printing condition of said input image;
(b) acquiring standard halftone data;
(c) calculating a deformation direction and a deformation ratio of halftone dots, based on said printing condition;
(d) deforming said standard halftone data in said deformation direction, based on said deformation ratio calculated in said step (c); and
(e) converting said input image into a halftone image by using the halftone data deformed in said step (d).

10. The image processing method according to claim 9, wherein
said deformation direction and said deformation ratio of the halftone dots are calculated in said step (c), based on information about a printing direction and a printing speed acquired in said step (a).

11. The image processing method according to claim 9, wherein
said deformation direction and said deformation ratio of the halftone dots are calculated in said step (c), based on information about a grain direction and a grain roughness acquired in said step (a).

**12.** The image processing method according to claim 9, wherein
area data about halftone dots arranged in an array as a unit is acquired as said halftone data in said step (b), and
said area data is deformed in said step (d).

**13.** The image processing method according to claim 9, wherein
dot data about a single halftone dot is acquired as said halftone data in said step (b), and
said dot data is deformed in said step (d).

**14.** A program for converting an input image into a halftone image, said program causing a computer to perform the
steps of:

(a) acquiring a printing condition of said input image;
(b) acquiring standard halftone data;
(c) calculating a deformation direction and a deformation ratio of halftone dots, based on said printing condition;
(d) deforming said standard halftone data in said deformation direction, based on said deformation ratio calculated in said step (c); and
(e) converting said input image into a halftone image by using the halftone data deformed in said step (d).

**15.** The program according to claim 14, wherein
said deformation direction and said deformation ratio of the halftone dots are calculated in said step (c), based on
information about a printing direction and a printing speed acquired in said step (a).

**16.** The program according to claim 14, wherein
said deformation direction and said deformation ratio of the halftone dots are calculated in said step (c), based on
information about a grain direction and a grain roughness acquired in said step (a).

**17.** The program according to claim 14, wherein
area data about halftone dots arranged in an array as a unit is acquired as said halftone data in said step (b), and
said area data is deformed in said step (d).

**18.** The program according to claim 14, wherein
dot data about a single halftone dot is acquired as said halftone data in said step (b), and
said dot data is deformed in said step (d).

EP 1 868 365 A2

F I G . 2

F I G . 3

F I G . 4

```
        ┌─────────────────┐
        │     S T A R T   │
        └─────────────────┘
                 │
                 ▼
    ┌───────────────────────────┐
    │       INPUT IMAGE         │──── S1
    └───────────────────────────┘
                 │
                 ▼
    ┌───────────────────────────┐
    │  ACQUIRE PRINTING CONDITION │──── S2
    └───────────────────────────┘
                 │
                 ▼
    ┌───────────────────────────┐
    │  CALCULATE DEFORMATION    │
    │  DIRECTION AND DEFORMATION │──── S3
    │  RATIO OF HALFTONE DOTS    │
    └───────────────────────────┘
                 │
                 ▼
    ┌───────────────────────────┐
    │ SPECIFY TYPE OF HALFTONE DOTS │──── S4
    └───────────────────────────┘
                 │
                 ▼
    ┌───────────────────────────┐
    │     READ HALFTONE DATA    │──── S5
    └───────────────────────────┘
                 │
                 ▼
    ┌───────────────────────────┐
    │    DEFORM HALFTONE DATA   │──── S6
    └───────────────────────────┘
                 │
                 ▼
    ┌───────────────────────────┐
    │  PERFORM RIP DEVELOPMENT  │
    │ PROCESS AND SCREENING PROCESS │──── S7
    └───────────────────────────┘
                 │
                 ▼
    ┌───────────────────────────┐
    │   PRODUCE PRINTING PLATE  │──── S8
    └───────────────────────────┘
                 │
                 ▼
    ┌───────────────────────────┐
    │          PRINT            │──── S9
    └───────────────────────────┘
                 │
                 ▼
        ┌─────────────────┐
        │    E N D        │
        └─────────────────┘
```

F I G . 5

101

EP 1 868 365 A2

# F I G . 6

```
            ┌─────────────┐
            │   START     │
            └──────┬──────┘
                   │
                   ▼
       ┌───────────────────────┐
       │     INPUT IMAGE       │──── S101
       └───────────┬───────────┘
                   │
                   ▼
       ┌───────────────────────┐
       │ ACQUIRE PRINTING CONDITION │──── S102
       └───────────┬───────────┘
                   │
                   ▼
  ┌────────────────────────────────┐
  │ CALCULATE DEFORMATION DIRECTION AND │──── S103
  │ DEFORMATION RATIO OF HALFTONE DOTS  │
  └───────────────┬────────────────┘
                   │
                   ▼
       ┌───────────────────────┐
       │ SPECIFY TYPE OF HALFTONE DOTS │──── S104
       └───────────┬───────────┘
                   │
                   ▼
       ┌───────────────────────┐
       │   READ HALFTONE DATA   │──── S105
       └───────────┬───────────┘
                   │
                   ▼
       ┌───────────────────────┐
       │  PERFORM RIP DEVELOPMENT  │──── S106
       │ PROCESS AND SCREENING PROCESS │
       └───────────┬───────────┘
                   │
                   ▼
       ┌───────────────────────┐
       │ PRODUCE PRINTING PLATE │──── S107
       └───────────┬───────────┘
                   │
                   ▼
       ┌───────────────────────┐
       │        PRINT          │──── S108
       └───────────┬───────────┘
                   │
                   ▼
            ┌─────────────┐
            │    END      │
            └─────────────┘
```

F I G . 7

PRINTING DIRECTION

P

Hb a

Hb

F I G . 8

PRINTING DIRECTION

Hab

P

Haa

Ha

**EP 1 868 365 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000295476 A